# EUROPEAN PATENT SPECIFICATION

(11) **EP 2 688 606 B1**
(45) Date of publication and mention of the grant of the patent: **09.05.2018**
(21) Application number: 12760805.7
(22) Date of filing: 20.03.2012
(51) Int. Cl.: A61C 5/62

(54) **CAPSULE AND DELIVERY TIP FOR DISPENSING REACTIVE DENTAL MATERIAL**
KAPSEL UND AUSGABESPITZE ZUR AUSGABE EINES ZAHNÄRZTLICHEN REAKTIONSMATERIALS
CAPSULE ET EXTRÉMITÉ D'ADMINISTRATION D'UN MATÉRIAU DENTAIRE RÉACTIF

(30) Priority: 22.03.2011 US 201113069161
(43) Date of publication of application: 29.01.2014
(73) Proprietor: CENTRIX, INC., Shelton, CT 06484 (US)
(72) Inventor: KLEIN, Leif, Madison, CT 06443 (US); SAILY, David, Ridgefield, CT 06877 (US); DUBEY, Ryan, Meriden, CT 06450 (US); GRADY, Jay, Walcott, CT 06716 (US)
(74) Representative: Grünecker Patent- und Rechtsanwälte PartG mbB
(86) International application number: PCT/US2012/029845
(87) International publication number: WO 2012/129248

(56) References cited:
- WO-A1-03/082382
- US-A- 5 336 088
- US-A- 6 135 771
- US-A1- 2004 122 377
- US-A1- 2004 186 437
- US-A1- 2007 164 047
- US-A1- 2007 259 313
- US-A1- 2010 255 443
- US-A1- 2010 255 443

## Description

### FIELD OF THE INVENTION

The present invention relates in general to the dispensing of a dental material, and more particularly to the delivery of a dental material that may react with metal.

### BACKGROUND OF THE INVENTION

In practicing dentistry it is often necessary to precisely position small quantities of material in difficult to reach locations within a patient's mouth. Some of these materials are often difficult to work with because of their viscosity or their reactivity or caustic nature. Accordingly there have been many devices developed to aid the dentist or dental practitioner in the placement of different dental materials. One such invention is disclosed in US Patent 5,489,207 entitled "Dental Cartridge Extruder with Rigid Drop in Front End", issuing to Dragan et al on February 6, 1996. Therein disclosed is a manual dental extruder or syringe used in combination with a dental cartridge, capsule, or ampoule for extruding viscous dental material. Additionally in dentistry various capsules or tips have been developed for specific applications. One such capsule is disclosed in US Patent 5,052,927 entitled "Syringe and Disposable Capsule with Cannula for Use Therewith" issuing to Discko, Jr., on October 1, 1991. Therein disclosed is a capsule for dispensing a dental material having a metal cannula thereon permitting precise placement of the dental material.

Another application for a tip is disclosed in US Patent 5,876,384 entitled "Micro Aspirator" issuing to Dragan et al on March 2, 1999. Therein disclosed is an aspirating tip placed on a flexible tube for removing blood, debris and fluids from around a small surgical site.

Another dental cartridge intended for a specific application is disclosed in US Patent 6,135,771 entitled "Dental Cartridge Having an Attachable Delivery Portion" issuing to Dragan et al on October 24, 2000. Therein disclosed is a dental cartridge or capsule having a body portion and a delivery portion or a cap with a metal cannula. The dental cartridge permits the mixing of a first component, typically a powder, and a liquid component of dental material prior to dispensing.

While these prior dental devices have made dentistry easier for the practicing dentist in their particular or specific areas of application, there is a continuing need to develop specialized delivery systems for specific dental materials so as to make dentistry easier. The reactivity or caustic nature of some dental materials to metal has created problems in storing these dental materials in a unit dose capsule designed for precise placement with a metal cannula. Some dental materials, such as material containing chemicals that may react with metal, have been difficult to store and dispense. For example, aluminum chloride may be used as a component in a dental material. Aluminum chloride will react with metal if maintained in contact or in close proximity with the metal for a relatively long time. There have been continuing problems using a unit dose container having a metal cannula containing a dental material that may react with the metal cannula. As a result, the dental material may become unusable or may cause undesirable effects such as discoloration or a failure to perform as desired. Therefore, there is a need for a specialized delivery system that permits the storage of a unit dose of potentially reactive dental material that can be dispensed precisely with a metal cannula.

Document WO-A-03082382 relates to a valve syringe comprising a syringe barrel (12) and an applicator valve (30) adapted to rotate relative to the barrel between closed and open positions. In the open position, one or more slots in the applicator valve align with the holes in a discharge end of the syringe barrel in order to allow fluid material to flow therethrough. In a closed position, the contact surface of the application valve occludes the holes in the barrel in order to seal them and prevent flow therethrough.

### SUMMARY OF THE INVENTION

The above object is solved by the subject matter of claim 1.

It is an object of the present invention to prevent a dental material from reacting with the material of the delivery system.

It is a more specific object of the present invention to prevent a dental material from being in prolonged contact or close proximity with a metal cannula so as to prevent a reaction therewith.

It is yet another object of the present invention to make dentistry easier.

It is another object of the present invention to provide a material capsule that can be easily secured to a delivery tip having a cannula.

It is an advantage of the present invention that a dental material is stored in a unit dose container for prolonged periods without reacting with the capsule or delivery tip.

It is another advantage of the present invention that the dental material is prevented from contacting or being in close proximity with a metal cannula preventing a reaction or contamination of the dental material.

It is yet another advantage of the present invention that the material capsule can be easily held for attaching the delivery tip thereto.

It is a feature of the present invention that a metal cannula is separated from contact with the dental material prior to dispensing the dental material.

It is another feature of the present invention in one embodiment that the material capsule has a snap-off seal adjacent a delivery tip connector end.

It is yet another feature of the present invention that various means are provided for securely holding a delivery tip on to a material capsule.

It is another feature of the present invention that grips are formed on the external material capsule surface adjacent an opening.

It is another feature of the present invention that a radially increasing external transition portion extends between the end of a material bore and an external delivery tip surface and a radially decreasing material bore transition extends between the end of the material bore to a material bore orifice.

These and other objects, advantages, and features will become more readily apparent in view of the following more detailed description.

### BRIEF DESCRIPTION OF THE DRAWINGS

Fig. 1 is a perspective view of the delivery system of the present invention without the attachment of a delivery tip.
Fig. 2 is a side elevational view of an embodiment of the present invention without the attachment of a delivery tip.
Fig. 3 is a cross-section of the embodiment illustrated in Fig. 2.
Fig. 4 is a side elevational view of another embodiment of the present invention without the attachment of a delivery tip.
Fig. 5 is a cross-section of the embodiment illustrated in Fig. 4.
Fig. 6 is a perspective view of an embodiment of delivery tip.
Fig. 7 is a side elevational view of the delivery tip illustrated in Fig. 6.
Fig. 8 is a longitudinal cross section of an embodiment of the present invention using a snap-on cap.
Fig. 9 is a side elevational view in partial cross section illustrating the material capsule and attached delivery tip.
Fig. 10 is a side elevational view in partial cross section illustrating the material capsule having an externally threaded delivery end portion and attached delivery tip.
Fig. 11 is a side elevational view in partial cross section illustrating the material capsule having an internally threaded delivery end portion and attached delivery tip.
Fig. 12 is a longitudinal cross section of an embodiment of the present invention having a material capsule and attached universal threaded cap.
Fig. 13 is a longitudinal cross section of another embodiment of the present invention having a breakaway tab and externally threaded delivery end portion.
Fig. 14 is a longitudinal cross section of another embodiment of the present invention having a breakaway tap and an internally threaded delivery end portion.
Fig. 15 is a side elevational view in partial cross section illustrating the material capsule and attached delivery tip having a Luer lock type connection.
Fig. 16 is a perspective view of another embodiment of the invention having a radially increasing external material capsule transition and a Luer lock type connection for receiving a delivery tip.
Fig. 17 is a side elevational view of the embodiment illustrated in Fig. 16.
Fig. 18 is a cross section perspective view taken along line 18-18 in Fig. 16.
Fig. 19 is a side elevational view of the embodiment illustrated in Fig. 16 having a delivery tip attached.

### DETAILED DESCRIPTION OF THE PREFERRED EMBODIMENTS

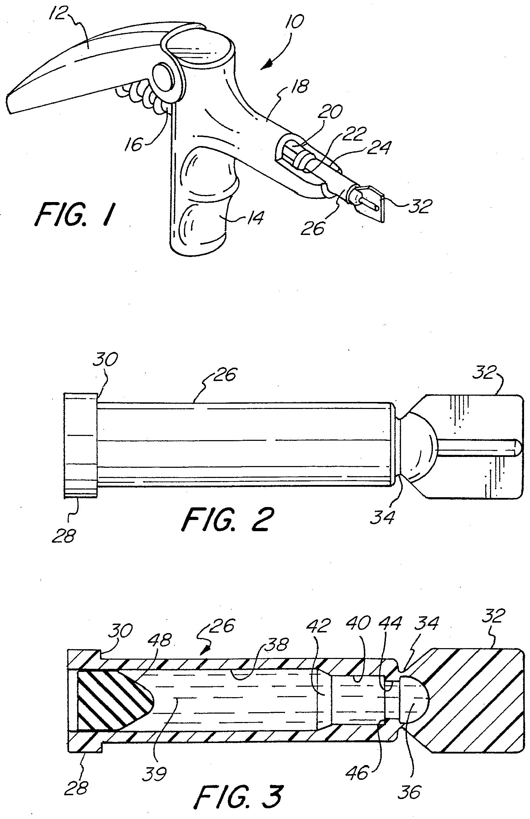

Fig. 1 is a perspective view illustrating the delivery system and capsule of the present invention. A syringe 10 has a lever 12 and a piston 16 reciprocally placed within a barrel 18. The lever 12 causes the syringe 10 to have a mechanical advantage permitting the dispensing of viscous dental materials. A breach 20 formed in the barrel 18 has formed therein a shoulder 22 and sidewalls 24. The sidewalls 24 may be flexible, providing a snap-fit around the material capsule 26. The material capsule 26 is illustrated with a breakaway tab 32 thereon. The syringe 10 may be similar to the syringe disclosed in US Patent 5,489,207.

Fig. 2 is a side elevational view more clearly illustrating the features of the material capsule 26. The material capsule 26 has an external flange 28. An external shoulder 30 is formed adjacent flange 28. A notch or web 34 is formed between the breakaway tab 32 and the material capsule 26. The material capsule and breakaway tab 32 is preferably made of plastic.

Fig. 3 more clearly illustrates the internal structure of the material capsule 26. The material capsule 26 is sealed at one end by a plug or piston 48. The plug or piston 48 may be frictionally fit within the material bore 38 or it may be sonically welded thereto so that it may be easily broken away when advanced. That is the piston 48 is retained in position yet may be broken free for dispensing the reactive dental material when desired.

A dental material 39 is contained within the material capsule 26. An internal angled transition 42 reduces the diameter to a delivery bore 40 adjacent the delivery end portion of the material capsule 26. The delivery end portion has an internal flange 44 that forms an internal shoulder 46. Space 36 permits the web 34 to be formed so that the tab 32 may be broken away from the material capsule 26 forming an opening and exposing the material 39 contained therein.

The dental material may contain a chemical, such as aluminum chloride, which is reactive or caustic to metal. The dental material may be any dental material that may react with the dispensing or delivery tip cannula material. Other caustic materials that may be used include aluminum potassium sulfate, aluminum sulfate, ferric sulfate, aluminum ammonium sulfate or alum, ferric chloride, sodium chloride, zinc chloride, and the like. Preferably, the dental material is a retraction material used to retract gingival tissue from around a tooth. The retraction material may be a clay based retraction material. For example, the dental material my contain white clay or kaolin and aluminum chloride.

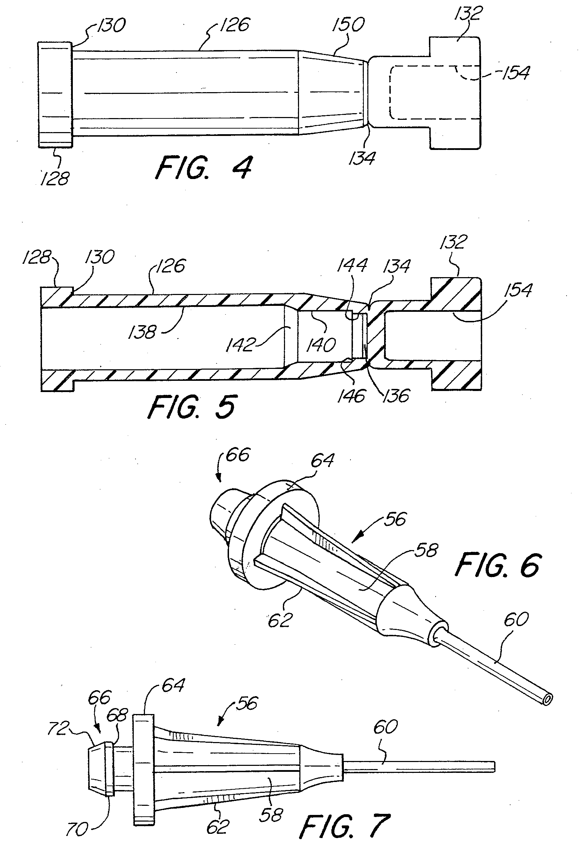

Figs. 4 and 5 illustrate a slightly modified version of a material capsule 126. The material capsule 126 has an external flange 128 that forms an external shoulder 130. A breakaway tab 132 is attached to the material capsule 126 by web 134. The material bore 138 has an internal angled transition 142 entering the delivery bore 140. A space 136 is formed adjacent the delivery end and permits the web 134 to be formed. An internal flange 144 forms internal shoulder 146.

Figs. 6 and 7 illustrate a delivery tip 56. The delivery tip 56 comprises a body portion 58 having ribs 62 thereon. The body portion 58 and ribs 62 are preferably made of plastic. A metal cannula 60 is formed on one end. A delivery tip connector end 66 is formed on the other end. Flange 64 is placed adjacent the delivery tip connector end 66. The delivery tip connector end 66 has a shoulder 68, a flat portion 70 and an angled portion 72. Upon removal of the breakaway tab 132, illustrated in Fig. 5, the delivery tip 56 may be placed on the material capsule 126 by inserting the delivery tip connector end 66 into the opening formed by the internal flange 144. The shoulder 168 of the delivery tip connector end 66 mates with the internal shoulder 146 of the material capsule 126. Accordingly the delivery tip 56 is securely connected to the material capsule 126 when the material contained therein is dispensed. This separation of the delivery tip 56 from the material capsule 26 prevents the material contained within the material capsule 126 from contacting the metal cannula 60 for prolonged periods. Therefore the material only contacts the metal cannula 60 for a relatively short period of time, substantially preventing any contamination or corrosive effect.

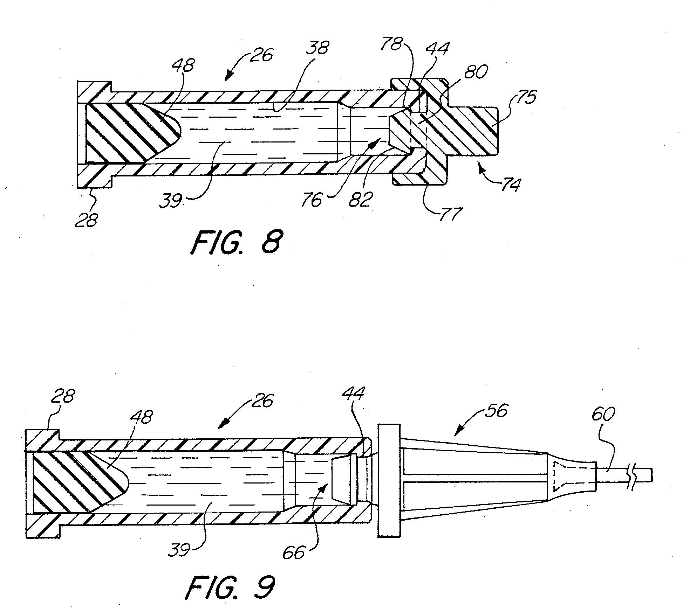

Fig. 8 illustrates an embodiment of the present invention utilizing a snap-on cap 74. The snap-on cap 74 may be used in place of the breakaway tab or in combination therewith when the breakaway tab has been removed and the material capsule 26 is desired to be sealed again. The snap-on cap 74 has a handle 75 and a cap connector end 76. A cap cover portion 77 helps retain the snap-on cap 74 in position and to seal the material capsule 26. The angled portion 82 and the combination of the shoulder 78 and internal flange 44 and flat portion 80 assure that the snap-on cap 74 is securely held in position and seals the opening of the material capsule 26.

Fig. 9 illustrates the delivery tip 56, with the metal cannula 60, attached to the material capsule 26. The delivery tip connector end 66 of the delivery tip 56 securely mates with the internal flange 44 formed on the material capsule 26. Upon advancing piston 48 the dental material 39 is extruded or forced out of the delivery tip 56 through the metal cannula 60. The ability to unseal the material capsule 26 and to place the delivery tip 56 thereon just prior to the use of the dental material 39 prevents the prolonged contact of the dental material 39 with the metal cannula 60. This prevents the possibility of corrosion or a reaction occurring due to prolonged contact of the dental material with the metal cannula 60. This results in greatly improved performance of some reactive dental materials.

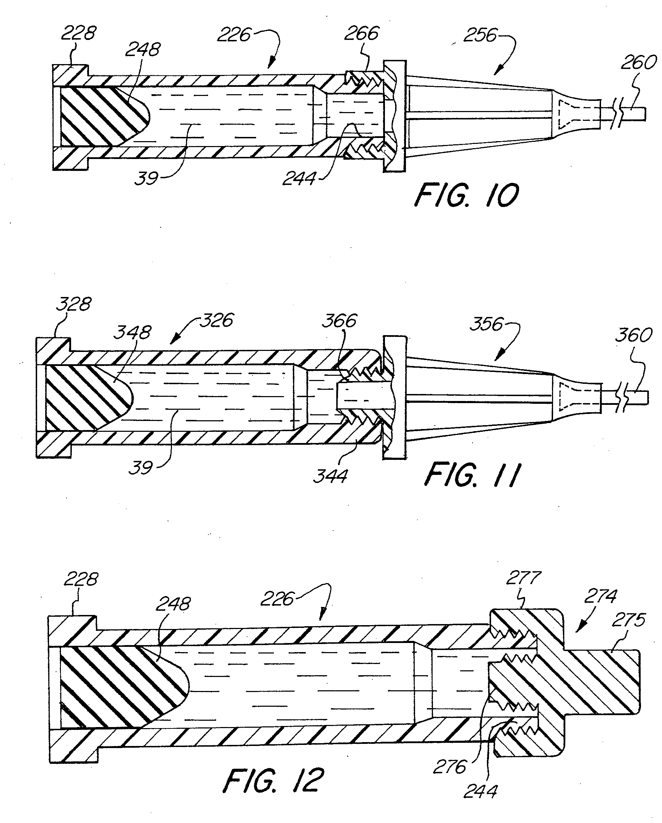

Fig. 10 illustrates another embodiment of the present invention that may be utilized when thick or viscous dental materials are used therewith so as to prevent the delivery tip from separating from the material capsule 226. In this embodiment the material capsule 226 having flange 228 and plug 248 has an externally screw threaded end 244 that mates with the internally screw threaded tip connector end 266 of the delivery tip 256. Accordingly a relatively viscous dental material 39 when forced through the cannula 260 will not cause the screw threaded delivery tip 256 to separate from the screw threaded material capsule 226.

Fig. 11 illustrates another embodiment having an internally threaded end 344. The internally threaded end 344 is formed within the open end of the material capsule 326 having external flange 328 and plug or piston 348. The delivery tip 356 has an externally threaded tip connector end 366 that mates with the internally threaded end 344 providing a secure connection. Accordingly, viscous dental material 39 extruded through the metal cannula 360 by advancing plug or piston 348 will not result in separation of the delivery tip 356 and the material capsule 326.

Fig. 12 illustrates an embodiment using a universal threaded cap 274. The universal cap 274 has a handle 275 and an internally threaded cap connector 276 and an externally threaded cap cover 277. The universal threaded cap 274 may be used on either the externally threaded end 244 of material capsule 226 or the internally threaded end 344 formed on the material capsule 326. Universal threaded cap 274 may be used in place of or in combination with a breakaway tab.

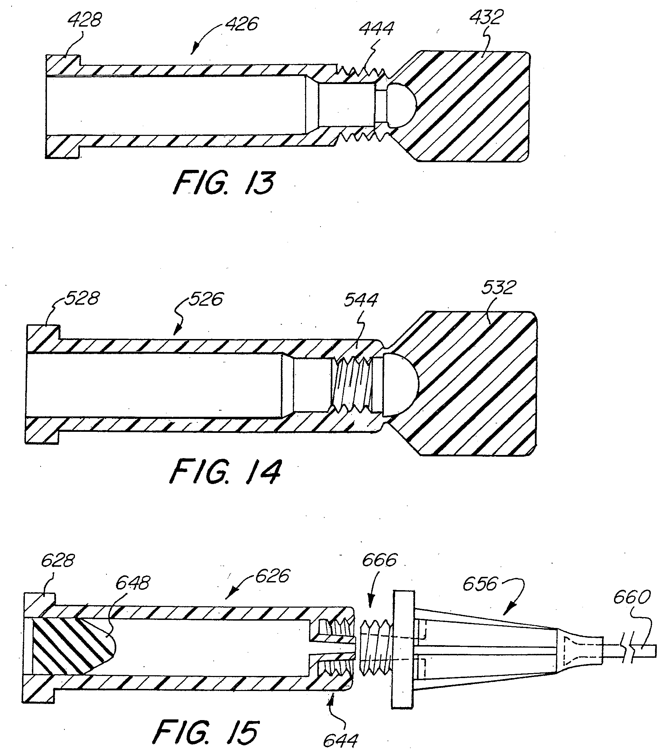

Fig. 13 illustrates another embodiment wherein the material capsule 426 has an external flange 428 on one end and an externally threaded tip end 444 on the other end and in combination with a breakaway tab 432. In this embodiment the breakaway tab 43 2 may be removed forming an opening and an internally threaded delivery tip 256 placed thereon, as illustrated in Fig. 10.

Fig. 14 illustrates another embodiment where the material capsule 526 has an external flange 528 on one end and an internally threaded tip end 544 on the other end. In this embodiment a breakaway tab 532 may be removed forming an opening and an externally threaded delivery tip 356, as illustrated in Fig. 11, may be threaded onto the internally threaded tip end 544.

Fig. 15 illustrates another embodiment having a Luer lock type connector. A Luer type connector has male and female slightly tapered tubes that interlock providing a secure fitting attachment. Fig. 15 illustrates a material capsule 626 having an external flange 628 and a piston 648 in one end and a male Luer lock type connector 644 on
the other. Delivery tip 656 has a metal cannula 660 on one end and a female Luer lock type connector 6 60 on the other end.

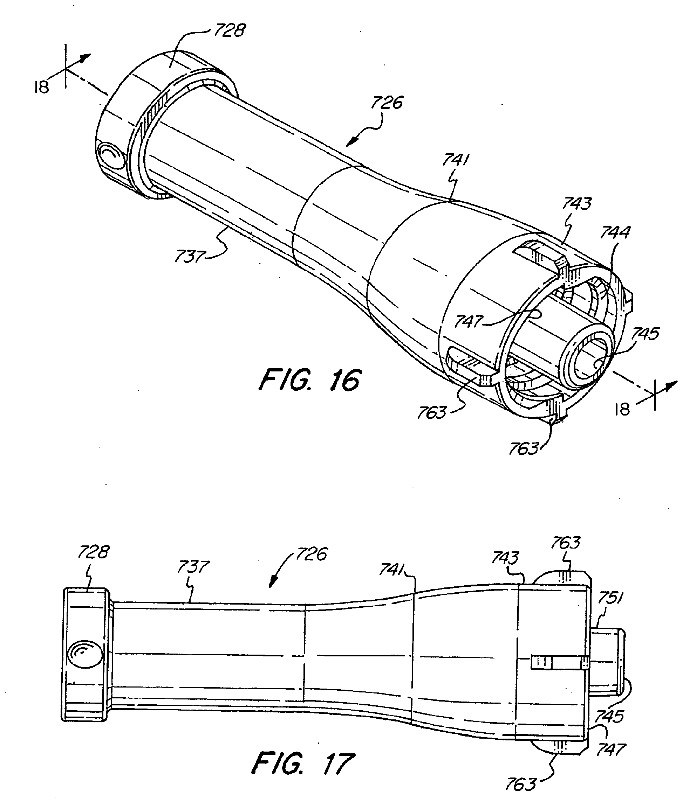

Figs. 16-18 illustrate another embodiment of the present invention that is similar to the embodiment illustrated in Fig. 15. The material capsule 726 has an external flange 728 and an external material capsule surface 737. Adjacent the external material capsule surface 737 is a radially increasing external material capsule transition 741 extending to the external material capsule opening surface 743. On the external material capsule opening surface 743 are placed grips 763. Placed on the interior surface of the external material capsule opening surface 743 are internal threads 744. The internal threads 744 are adapted to receive male threads on a delivery tip, such as that the delivery tip 656 illustrated in Fig. 15. Extending from the material capsule opening 747 is a material delivery orifice 745. As illustrated in Fig. 17, this material delivery orifice 745 has an external delivery tip surface 751 that extends beyond the material capsule opening 747.

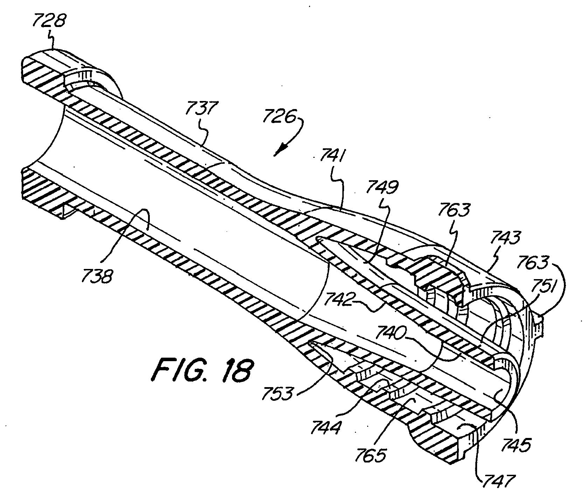

Fig. 18 is a cross section perspective view better illustrating the interior of the material capsule 726. In this view the transition of the constant diameter material bore 738 to the radially decreasing material bore transition inner surface 742 is clearly illustrated. The material capsule 726 has an entrance end for receiving a material and a plug or piston adjacent external flange 728, as illustrated in the prior figures, and an opposing dispensing end adjacent the radially decreasing material bore transition inner surface 742. The radially decreasing material bore transition inner surface 742 extends to the material delivery bore 740 which opens to the material delivery orifice 745. In this embodiment of the material capsule 726 there is a smooth transition from the constant diameter material bore 738 through the radially decreasing material bore transition inner surface 742 to the material delivery orifice 745. The sidewall of the material capsule 726 divides approximately adjacent the end of the material bore 738 and beginning of the radially increasing external material capsule transition 741 at a bisected sidewall apex 753. Accordingly, the radially decreasing material bore transition external surface 749 diverges with the radially increasing external material capsule transition 741 forming an increasing radial dimension gap there between forming the material capsule opening 747 opposite the bisected sidewall apex. Internal threads 744 are formed on an inner material capsule opening surface 765, and are adapted to mate with a delivery tip having a female Luer lock type end.

This embodiment improves the dispensing of viscous dental materials contained within the material bore 738. For example, the dental material may be a clay based gingival retraction paste that contains aluminum chloride and kaolin clay. Preferably the retraction paste contains fifteen percent of aluminum chloride. The retraction paste is placed in the material bore 738 and sealed with a plug adjacent the external flange 728, as illustrated in Fig. 15, with the material delivery orifice 745 sealed with a removable cap as illustrated in Figs. 8 and 12. The material capsule 726 may then be placed in a sealed foil package separately from the delivery tip having a metal cannula. This prevents the potentially caustic aluminum chloride from reacting over a period of time with the metal cannula.

The material in the material capsule 726 is easily dispensed by placing the material capsule 726 into a syringe 10 as illustrated in Fig. I. A plug or piston, as illustrated in the prior figures, is placed in the material bore 738 to extrude a viscous dental material out of the material delivery orifice 745 and through an attached delivery tip.

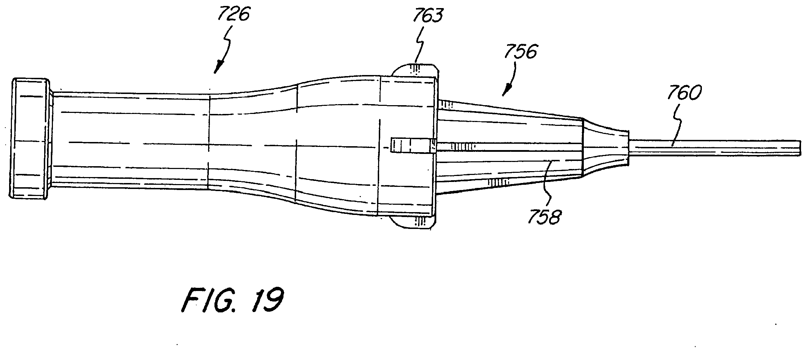

Fig. 19 is a side elevational view illustrating a delivery material capsule system with the material capsule 726 having a delivery tip 756 attached. The delivery tip 756 has a body 758 and a metal cannula 760. The metal cannula 760 may be ductile or easily bent. The delivery tip 756 may be attached to the material capsule 726 by any type of attachment, but is preferably threaded onto the material capsule 726. The grips 763 greatly facilitate the threading of the delivery tip 756 onto the material capsule 726.

Accordingly, the various embodiments of the present invention all provide for a potentially caustic or reactive dental material to be separated in a sealed material capsule, preventing prolonged contact with a metal cannula used for precisely placing the dental material in a patient's mouth. It is desirable that the potentially caustic or reactive dental material is not only kept from direct contact with the metal cannula, but that the potentially caustic or reactive dental material is kept out of proximity with the metal cannula and is preferably not sealed in the same package. For example, the material capsule containing the dental material may be packaged in a sealed pouch separately from the delivery tip with the metal cannula. Additionally, the embodiment having the piston or plug sonically welded to the material capsule may be advantageous to prevent corrosive gases form the potentially caustic or reactive dental material from escaping. The metal cannula should be kept from prolonged contact or proximity with any possible volatile gaseous components of the potentially caustic or reactive dental material. The present invention therefore greatly facilitates a unit dose material dispensing system that can be used with reactive or caustic dental materials. The present invention therefore provides for improved results and makes dentistry easier.

While the present invention has been described with respect to several embodiments, it should readily be appreciated that various modifications may be made.

## Claims

1. A delivery system for dispensing a reactive or caustic dental material through a metal cannula comprising:
the reactive or caustic dental material;
a material capsule (726) having a material bore (738) with a constant diameter and an external material capsule surface, the material bore having an entrance end and a dispensing end;
an external flange (728) formed on said material capsule adjacent the entrance end;
a bisected sidewall apex (753) formed in said material capsule adjacent the dispensing end of the material bore;
a radially decreasing material bore transition inner surface (742) adjacent the dispensing end of the material bore and extending from said bisected sidewall apex (753), said radially decreasing material bore transition inner surface ending in a material delivery bore (740) with an orifice (745);
a radially increasing external material capsule transition surface (741) adjacent the dispensing end of the material bore and extending from said bisected sidewall apex (753), said radially increasing external material capsule transition surface ending in an external material capsule opening surface (765) with an opening (747), wherein a gap having an increasing radial dimension progressing from said bisected sidewall apex to the opening is formed between said radially decreasing material bore transition inner surface (742) and said radially increasing external material capsule transition surface (741);
internal threads (744) formed within the gap on an internal material capsule opening surface adjacent the opening; and
a delivery tip (756) having a metal cannula (760) attachable to said internal threads,
**characterized in that**
the caustic or reactive dental material reacts with the delivery tip cannula material and is contained
separately in said material capsule and prevented from contacting or residing in proximity to the metal cannula prior to being dispensed, and
the material bore is sealed with a removable cap.

2. A delivery system including reactive or caustic dental material as in claim 1, further comprising grips (763) placed on the external material capsule opening surface adjacent the opening.

3. A delivery system including reactive or caustic dental material as in claim 1, further comprising a retraction dental material placed in said material capsule.

4. A delivery system including reactive or caustic dental material as in claim 3, wherein said retraction dental material comprises aluminum chloride and kaolin clay.

5. A delivery system including reactive or caustic dental material as in claim 1 further comprising:
a sealed foil package having said material capsule placed therein separately from the delivery tip having a metal cannula.

## Patentansprüche

1. Verabreichungssystem zum Abgeben von reaktivem oder kaustischem Dentalmaterial durch eine Metallkanüle, umfassend:
das reaktive oder kaustische Dentalmaterial;
eine Materialkapsel (726) mit einer Materialbohrung (738) mit konstantem Durchmesser und einer äußeren Materialkapselfläche, wobei die Materialbohrung ein Eintrittsende und ein Abgabeende aufweist;
einen Außenflansch (728), der an der Materialkapsel neben dem Eintrittsende ausgebildet ist;
einen halbierten Seitenwandscheitel (753), der in der Materialkapsel neben dem Abgabeende der Materialbohrung ausgebildet ist;
eine radial abnehmende innere Materialbohrungsübergangsfläche (742), die sich neben dem Abgabeende der Materialbohrung befindet und sich von dem halbierten Seitenwandscheitel (753) erstreckt, wobei die radial abnehmende innere Materialbohrungsübergangsfläche in einer Materialabgabebohrung (740) mit einer Öffnung (745) endet;
eine radial zunehmende äußere Materialkapsel-Übergangsfläche (741), die sich neben dem Abgabeende der Materialbohrung befindet und sich von dem halbierten Seitenwandscheitel (753) erstreckt, wobei die radial zunehmende äußere Materialkapsel-Übergangsfläche in einer äußeren Materialkapsel-Öffnungsfläche (765) mit einer Öffnung (747) endet, wobei ein Spalt mit einer zunehmenden radialen Abmessung von dem halbierten Seitenwandscheitel zu der Öffnung zwischen der radial abnehmenden inneren MaterialbohrungsÜbergangsfläche (742) und der radial zunehmenden äußeren Materialkapsel-Übergangsfläche (741) ausgebildet ist;
Innengewinde (744), die in dem Spalt auf einer inneren Materialkapsel-Öffnungsfläche neben der Öffnung ausgebildet sind; und
eine Abgabespitze (756) mit einer Metallkanüle (760), die an den Innengewinden anbringbar ist,
**dadurch gekennzeichnet, dass**
das kaustische oder reaktive Dentalmaterial mit dem Material der Abgabespitzenkanüle reagiert, getrennt in der Materialkapsel enthalten ist und daran gehindert wird, vor der Abgabe mit der Metallkanüle in Kontakt zu kommen oder sich darin zu befinden, und
die Materialbohrung mit einer abnehmbaren Kappe verschlossen ist.

2. Verabreichungssystem mit reaktivem oder kaustischem Dentalmaterial nach Anspruch 1, das ferner Griffe (763) umfasst, die auf der äußeren Materialkapsel-Öffnungsfläche neben der Öffnung angeordnet sind.

3. Verabreichungssystem mit reaktivem oder kaustischem Dentalmaterial nach Anspruch 1, das ferner ein Retraktionszahnmaterial, das in die Materialkapsel platziert ist, umfasst.

4. Verabreichungssystem mit reaktivem oder kaustischem Dentalmaterial nach Anspruch 3, wobei das Retraktionszahnmaterial Aluminiumchlorid und Kaolinton umfasst.

5. Verabreichungssystem mit reaktivem oder kaustischem Dentalmaterial nach Anspruch 1, das ferner eine versiegelte Folienpackung, in der die Materialkapsel getrennt von der Abgabespitze mit einer Metallkanüle angeordnet ist, umfasst.

## Revendications

1. Système de distribution destiné à distribuer un matériau dentaire réactif ou caustique à travers une canule métallique comprenant :
le matériau dentaire réactif ou caustique ;
une capsule de matériau (726) ayant un trou de matériau (738) présentant un diamètre constant et une surface de capsule de matériau externe, le trou de matériau présentant une extrémité d'entrée et une extrémité de distribution ;
une collerette externe (728) formée sur ladite capsule de matériau adjacente à l'extrémité d'entrée ;
un apex de paroi latérale bisectionnée (753) formé dans ladite capsule de matériau adjacente à l'extrémité de distribution du trou de matériau ;
une surface interne de transition de trou de matériau diminuant radialement (742) adjacente à l'extrémité de distribution du trou de matériau et s'étendant depuis ledit apex de paroi latérale bisectionnée (753), ladite surface interne de transition de trou de matériau diminuant radialement se terminant dans un trou de distribution de matériau (740) présentant un orifice (745) ;
une surface de transition de capsule de matériau externe augmentant radialement (741) adjacente à l'extrémité de distribution du trou de matériau et s'étendant depuis ledit apex de paroi latérale bisectionnée (753), ladite surface de transition de capsule de matériau externe augmentant radialement se terminant en une surface d'ouverture de capsule de matériau externe (765) présentant une ouverture (747), un espace présentant une dimension augmentant radialement progressant depuis ledit apex de paroi latérale bisectionnée vers l'ouverture étant formé entre ladite surface interne de transition de trou de matériau diminuant radialement (742) et ladite surface de transition de capsule de matériau externe augmentant radialement (741) ;
des filetages internes (744) formés à l'intérieur de l'espace sur une surface d'ouverture de capsule de matériau interne adjacente à l'ouverture ; et
une extrémité de distribution (756) possédant une canule métallique (760) pouvant être fixée auxdits filetages internes,
**caractérisé en ce que**
le matériau dentaire réactif ou caustique réagit avec le matériau de canule d'extrémité de distribution et est contenu séparément dans ladite capsule de matériau et ne peut entrer en contact ni rester à proximité de la canule métallique avant d'être distribué, et
le trou de matériau étant hermétiquement fermé grâce à un bouchon amovible.

2. Système de distribution comprenant le matériau dentaire réactif ou caustique selon la revendication 1, comprenant en outre des prises (763) placées sur la surface d'ouverture de capsule de matériau externe adjacente à l'ouverture.

3. Système de distribution comprenant le matériau dentaire réactif ou caustique selon la revendication 1, comprenant en outre un matériau dentaire de rétractation placé dans ladite capsule de matériau.

4. Système de distribution comprenant le matériau dentaire réactif ou caustique selon la revendication 3, dans lequel ledit matériau dentaire de rétractation comprend du chlorure d'aluminium et de l'argile type kaolin.

5. Système de distribution comprenant le matériau dentaire réactif ou caustique selon la revendication 1 comprenant en outre :
un emballage en feuil hermétiquement scellé présentant ladite capsule de matériau placé à l'intérieur séparément de l'extrémité de distribution possédant une canule métallique.
